# EUROPEAN PATENT SPECIFICATION

(11) **EP 2 247 623 B1**
(45) Date of publication and mention of the grant of the patent: **22.01.2014**
(21) Application number: 09713671.7
(22) Date of filing: 25.02.2009
(51) Int. Cl.: C08B 3/22, C08B 11/02, C08B 15/00, C09D 101/08, C09J 101/08, C08B 5/04, C12P 19/44

(54) **NEW CELLULOSE DERIVATIVES, METHOD OF PRODUCING THE SAME AND USE THEREOF**
NEUE ZELLULOSEDERIVATE, HERSTELLUNGSVERFAHREN DAFÜR UND VERWENDUNG DAVON
NOUVEAUX DÉRIVÉS DE CELLULOSE, LEUR PROCÉDÉ DE FABRICATION ET LEUR UTILISATION

(30) Priority: 25.02.2008 FI 20085171
(43) Date of publication of application: 10.11.2010
(73) Proprietor: Teknologian tutkimuskeskus VTT, 02044 VTT (FI)
(72) Inventor: MIKKONEN, Hannu, FI-02044 Vtt (FI); PELTONEN, Soili, FI-02044 Vtt (FI); LAINE, Aki, 4125 Riehen (CH); VALTA, Kyösti, FI-33101 Tampere (FI); SIVONEN, Eino, FI-33101 Tampere (FI); MALM, Tero, FI-33101 Tampere (FI); SARLIN, Juha, FI-33101 Tampere (FI)
(74) Representative: Sundman, Patrik Christoffer
(86) International application number: PCT/FI2009/050159
(87) International publication number: WO 2009/106687

(56) References cited:
- US-A1- 2005 107 603
- YORK WS ET AL.: 'Preparation of oligomeric ß-glycosides from cellulose and hemicellulosic polysaccharides via the glycosyl transferase activity of a Trichoderma reesei cellulase' GLYCOBIOLOGY vol. 10, no. 2, 2000, pages 193 - 201, XP008139551
- LI J ET AL.: 'Enzymatic modification of hydroxyethylcellulose by transgalactosylation with ß-galactosidas' CARBOHYDRATE RESEARCH vol. 316, 1999, pages 133 - 137, XP008139550
- DATABASE CAPLUS XP008139564 Retrieved from STN Database accession no. 2008:729639 & JP 2008 138030 A (UNIV TOKYO AGRICULTURE ET AL.) 19 June 2008

## Description

According to such a method an ester or ether derivative of cellulose is reacted at acidic conditions with an alkanol having 1 to 6 hydroxyl groups, and the reaction product is recovered as such or is taken for further processing.

In addition, the following description describes further processing of the compound according to claim 1 or combined use thereof with a cellulose derivative treated by mechano-chemically with an oxidant.

Cellulose is the most common molecule found in nature. Natural cellulose is a linear compound with simple chemical functionality having 3 hydroxyl groups for a glucose unit. In the polymer chain of cellulose the glucose units are joined together only with 1->4 betaglycoside bonds. Total hydrolysis of 1->4 beta-glucoside bonds of cellulose produces D-glucose, and partial hydrolysis produces cellobiose. A natural polysaccharide resembling most the structure of cellulose is amylose of starch, wherein anhydroglucose units are joined together as a linear polymer with 1->4 alpha-glucoside bonds. In cellulose polymer, every glucose unit is turned 180° with respect to each others thus providing a possibility for an efficient hydrogen bonding between molecule chains.

The structure of a cellulose molecule is very well known and the natural cellulose molecule is not known to contain any branches of the molecule chain. Due to the stereochemistry of a cellulose molecule, water solubility properties thereof differ in many ways from those of starch. Water solubility of cellohexose with the same molecule weight is 5000 times lower that of a corresponding maltodextrin.

Ester and ether derivatives of cellulose are known in the art. Esters of organic acids of cellulose, such as cellulose acetate, propionate and butyrate, have commercial importance in the production of plastics, lacquers and textile fibres. Their use in fibre products is also known from patent literature. Thus, FI Patent Specification No. 10556 and FI

Application No. 2002170 describe a method for producing a water dispersion from a cellulose ester or a mixture thereof with a starch ester and the use thereof as a coating for paper or paperboard.

Furthermore, cellulose esters have been used as components of hot melt adhesive compositions.

Carboxylic acid esters with a longer carbon chain have been produced from cellulose, and also esters of unsaturated carboxylic acids, such as methacrylic acid and crotonic acid. Traditionally, by esterification of cellulose with an unsaturated carboxylic acid, grafting or cross-linking of the cellulose chain has been aimed at.

The use of cellulose acetate for improving mechanical properties of melt processible starch ester plastics is known from publication FI 104091.

The production of esters can be illustrated by a method for producing acetate:
Cellulose acetates with different degrees of substitution are produced by treating cellulose in the first step with acetic acid and acetanhydride with a mineral acid acting as a catalyst. Completely acetylated cellulose is hydrolyzed into the desired degree of substitution and polymerization by adding gradually water. Cellulose triacetate is obtained with very mild hydrolysis. Further hydrolyzed acetone-soluble product is called a secondary cellulose acetate. Both are used in the production of melt processible plastics and fibres, in which case plasticizers are admixed to the products. Cellulose acetate used in textile fibres is called Acetate Rayn. DP (or degree of polymerization) of cellulose acetate is much lower than that of natural cellulose and it is in average in order of 200 to 250. This is due to catalytic cleavage of glucoside bonds acid. Another ester derivate of cellulose, namely cellulose nitrate, is an important component of gunpowders and explosives. Cellulose plasticized with camphor is known by a trade name Celluloid. Cellulose nitrate has been used in production of photographic films, lacquers, textile fibres. Sulphuric acid used as a catalyst in production process of cellulose nitrate can party bind to cellulose as a sulphate ester that usually is removed from the end product hydrolytically.

Also esters of phosphoric acid and sulphuric acid have been produced from cellulose. In that case the object has been, for example, to improve the capability of cellulose fibres to be dyed.

Among ethers of cellulose, methoxylated, ethoxylated, hydroxyethylated, hydroxypropylated, aminoethylated, benzylated and carboxymethylated cellulose has commercial interest and importance. Cellulose ethers are produced by pretreating cellulose with an alkali, after which etherification is carried out either with alkyl halides or epoxides. Methyl sulphate can be used in production of methyl ethers.

Ethyl cellulose has been used in manner of cellulose acetate in plastic applications. Methyl cellulose is water soluble and it is used as thickener in foodstuff application, as an additive of adhesives and inks, and as a property regulator of textile fibres. Carboxymethyl, hydroxyethyl and hydroxypropyl cellulose are used for treating of textile fibres, as an additive for adhesives, and as an emulsifying agent, e.g. in latex paints, as well as rheology regulator agents in paper coating pastes.

Derivatives of cellulose have many applications. However, there are disadvantages relating to the prior art that restrict the usability of known products. These disadvantages are among other the following:
1. Melting points and melt viscosities of cellulose esters, when plasticized, are very high, which complicates the compounding thereof into other thermoplastic biopolymers, such as starch esters.
2. Although it is possible to adjust the molecular weight of a cellulose ester to a desired value in hydrolysis preformed in conjunction of the production process, however, it can be seen as a factor that increases expenses, since every quality has to be produced in principle separately in a batch process. Accordingly, commercial applications of cellulose esters are greatly limited to engineering plastics and pharmacy applications.
3. For the aforementioned reasons, hot melt adhesive compositions, wherein the polymer part of the adhesive consists solely of cellulose esters, are very difficult to produce. Large amounts of e.g. esters and ethers of aromatic compounds have to be used in the compositions, of which especially use of phthalic esters are been abandoned due to their possible toxicity.
4. High viscosity or temperature of polymer melt can be a restrictive factor in case of sizing of a fibrous web, such as paper, and especially in case where total or partial penetration of polymer into a fibrous network, more mechanical strength is looked for or the properties of paper are regulated.
5. High molecular weight of cellulose is the principal reason, why high amount of medium or reagent has to be used in production of derivatives thereof in order to achieve a sufficiently low viscosity and mixing efficiency. In that case, the expenses of the process are increased by the need to remove the excess of the unreacted alcohol component by washing. Furthermore, due to the hydrolysis sensitivity of cellulose, acidic catalysts have to be eliminated in the process step.
6. Plastics can be produced by compounding from cellulose esters and starch esters, when a suitable plasticizer is present in the process, which is according to the known technique glycerol or citric acid ester that is most typically suitable for both starting materials. However, a significant difference in softening temperature of starch esters and cellulose esters are causing difficulties in the process. Usually the problem is resolved by softening separately the cellulose and starch polymer with a plasticizer, after which compounding is carried out to obtain the final product.
7. There are also problems relating to the recycling of cellulose derivatives. Enzymes of microbes are namely capable to degrade pure cellulose totally, although pure cellulose is indeed totally biodegradable, biodegradability is decreased strongly when cellulose is esterified or etherified. Cellulose esters suitable for production of plastics are practically considered to be totally non-biodegradable (as measured by short time standard tests). However, publications are known in the literature, where the biodegradability of cellulose acetate have been attempted to improve.

The purpose of the present invention is to eliminate the drawbacks relating to the known technique and to provide new cellulose-based products that essentially improve suitability of cellulose derivatives and economical competitiveness thereof, e.g. in sizing technology, coating of paper and as a reinforcing component in bioplastics.

The invention is based on the idea of modifying a cellulose derivative, such as an ester or ether, by cleaving its anhydroglucose chain. Bonds between anhydroglucose units can be opened for example by producing transglycosylation products from a cellulose derivative or by oxidizing a derivative. This kind of a chemical modification can be generated by a process, wherein the alcohol component acting as a reagent with possible catalysts or an oxidizing chemical component is contacted with a cellulose derivative and wherein the reagent is consumed or it is bonded in to the product by a chemical bond. The process can be carried out in a continuous mechano-chemical extrusion or a batch process.

Products based on transglycosylation have been produced from natural starch and derivatives thereof. US Patent Specification No. 4,011,389 discloses the preparation of non-ionic surfactants from starch or dextrose by carrying out transglycosylation with propylene glycol or methoxyethanol, and after that reacting the product with alkylepoxide. According to FI Patent Application No. 2002317, derivatives of starch and monomeric or oligomeric derivatives of polyols are used in production of adhesives having a high dry matter content. On the other hand, FI Patent Application No. 20020313 describes modification of the structure of starch derivatives, especially starch esters, such as molecular weight and substitution, by transglycosylation and use of the reaction products as a component of hot melt adhesives. Also solutions based on the extrusion-technical transglycosylation of starch derivatives are known.

GB Patent Specification No. 433785 describes, on the other hand, a solution, wherein 10 parts by weight of cellulose triacetate are treated with 10 parts by weight of 80 % phosphoric acid and 120 parts by weight of ethylene glycol at a temperature of 95 °C. In the conditions of the patent publication, retroacetylation, or modification of acetylation/- acetyl exchange reaction is obtained.

However, none of the previous publications have suggested transglycosylation of cellulose derivatives or oxidation for cleaving of the glucoside bonds of cellulose for production of anhydroglucose oligomers or corresponding products, such that an alpha/beta alkyl or hydroxyalkyl group is joined to the terminal group of the molecule at position C-1 by a glucoside bond. Therefore, these products are new and they have quite interesting properties.

According to the method of the invention, in the cellulose structure there are produced by transglycosylation cellulose glycol alpha-beta bonds and i.a. 1,6-alpha glycoside bonds which can be derived from intramolecular transglycosylation of the cellulose. Along with free reducing ends, 1,4-alpha bonds originating from the transglycosylation are present. Foreign structure units of cellulose decrease the crystallinity of cellulose, which has advantages in most sizing and coating applications.

It has been found that the transglycosylated cellulose derivative has lower melt viscosity and easy applicability compared to the starting material. It has also easier compounding ability with starch esters, better processibility and biodegradability of the product. Due to these properties, the invention provides new uses for cellulose derivatives, in particular for cellulose esters and ethers. Compared with corresponding starch acetate-based products, technical solutions based on cellulose derivatives have better rigidity and higher softening temperature.

Considerable advantages are obtained with the present invention. Thus, transglycosylation or oxidation products of cellulose ester having a high degree of substitution (DS>1) form with the plastizisers, e.g. triethyl citrate, easily melting and flowable mixtures that adhere well onto different surfaces, such as paperboard and cellulose films. Furthermore, it can easily be compounded with biodegradable polymers, such as starch esters. The products according to the invention are suitable as hot melt adhesives for e.g. paper and paperboard products, as film laminating adhesives, primers and a water vapour barrier layer. Suitable application techniques include, for example, application using nozzles or in the form of curtains.

In plastics technology, the transglycosylation products of cellulose facilitate mixing of the starch ester into other biopolymers, such as starch ester and into poly(lactic acid).

New products can be produced by means of the invention. The raw material is commercially available. In sizing and coating technology, the product can be produced in situ as a process integrated into the paper and paperboard production.

Next, the invention will be examined more closely with the aid of a detailed description and some working embodiments.

The cellulose-based component according to the invention is "a transglycosylation product of cellulose". By this is meant a product obtainable by a chemical reaction from polysaccharide that is linked by beta-D1->4, D-glucopyranoside units thereof having at least in some of them an attached D-glucopyranoside- 1 alkyl or hydroxyalkyl ether group. In addition of this, the product can contain in the branching positions alpha/beta 1->6 glycoside bonds and with a small proportion 1->3 and 1->2 glycosides.

It is characteristic for a cellulose derivative according to the invention that a hydroxyalkyl ether substituent is connected to its cellobiose unit, having characteristic values of the characteristics chemical shift are in ¹H NMR spectrum 5.0 and 4.7 ppm (C-1 cellulose glycol alpha and beta).

The product is generated by reacting the cellulose derivative with an alkanol. Accordingly the transglycosylation product comprises alkyl or hydroxyalkyl glycoside of an ester or ether of cellulose, wherein the alkyl or hydroxyalkyl groups of glycoside residue comprise a carbon chain having 1 to 4 carbon atoms, and having 0 to 2 free hydroxyl groups and being connected to 1-carbon of the anhydroglucose unit via an oxy group. Typically alkyl or hydroxyalkyl groups are derived from an alcohol, a diol or a triol. Especially alkyl or hydroxyalkyl groups are derived from methahol, butanol, ethylene glycol, propylene glycol, butanediol or glycerol.

Technique of the invention is characterized in that the degradation of cellulose molecule occurs by an acid catalytic reaction of polyol and cellulose according the attached reaction equation.

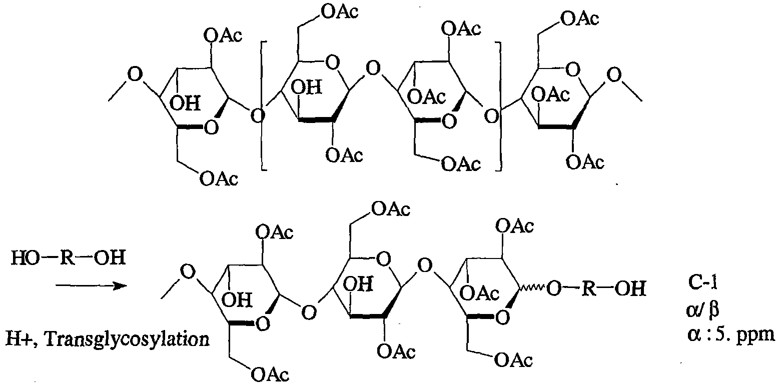

In an exemplary case the distribution of the cellulose acetate acetyl groups was found to be the following:

DSₜₒₜ 2.56 (initial situation DS = 3.0), DS_{C2}: 0.88, DS_{C3}: 0.88, DS_{C6}: 0.88. Consequently, also the substitution of the cellulose chain can be adjusted by the method, which becomes of significance when the aim is to improve the biodegradability of cellulose ester.

In the method for producing transglycosylation products, an ester or ether derivative of cellulose is reacted at acidic conditions with an alkanol having 1 to 4 hydroxyl groups, and the reaction product is recovered. According to a preferred alternative, the cellulose ester or ether is mixed with a mono-, di- or triol to form a reaction mixture, the reaction mixture is heated and the reaction of the cellulose ester with a mono-, di- or triol is continued until a clear solution is obtained, the reaction mixture is cooled and the reaction product is recovered. The reaction is carried out in presence of a catalyst, such as an inorganic or organic acid.

Our experiment has mainly been carried out on cellulose esters and we have surprisingly been able to find the reaction succeeding with 1 to 10 % total dosage, if alkanol and/or oxidizing chemical. For comparison and as a supplementary experiment, transglycosylation of cellulose ester and alkanol was carried out as a batch reaction, wherein the proportion of weight of alkanol to cellulose polymer was 10:1.

The study was focused on a transglycosylation reaction wherein diols are coupled to a cellulose derivative, while molar mass of cellulose derivative decreases. According to literature, this reaction has not previously been carried out for cellulose or its derivative, and to our surprise we have been able to find, that the reaction succeeds well for e.g. cellulose esters. The reaction can be carried out as a homogeneous batch reaction by using 1:1 to 1:10 mass ratio of diol and cellulose ester or by reactive extrusion using 1 to 15 %, especially about 5 to 15 %, for example 5 to 10 % or 10 to 15 % of diol calculated from the mass of the starting material.

In extrusion the cellulose ester plasticizes/melts totally into a clear plastic-like material.

Alternatively, the molar mass of cellulose can be decreased in solid state by cleaving cellulose molecules with peroxide oxidation. Peroxide degradation gives advantage in situation, where it is not appropriate to alter the chemical functionality of cellulose polymer but only to adjust the molar mass to a desired value.

According to one preferred embodiment of the invention peroxide is used 0.1 to 10 % calculated from the dry weight of the cellulose derivative.

According to a preferred embodiment, the oxidative compound is hydrogen peroxide, wherein the hydroperoxides formed by it in the reaction step disperse to gaseous products and thus leave the reaction mixture. In principle the same reaction can be effected with numerous peroxo compounds, such as persulphates and peroxo sulphuric acid, and with organic peroxides.

We have also been able to find that the peroxide treatment can be adjusted in solid state in such a way that covalent bonds form between the cellulose fibres. This is clearly seen when larger amounts of oxidants are used.

Oxidation can be effected separately or combined with the transglycosylation. In the latter case the oxidation can be a pretreatment step of the transglycosylation. It is also possible to apply it for after-treatment of the transglycosylation product.

The reaction products according to the invention are useful as components of hot melt adhesives based on natural polymers, in coatings of paper and paperboard as well as in polymer mixtures as strengthening components of starch plastics. By coating is meant herein mainly film coating (extrusion).

Small molecules are preferred in adhesive applications, wherein in a preferred application the aim is to dextrinate the cellulose residue (or the aim is on oligomeric products, where the amount of anhydroglucose units are up to 10, especially about 5 to 10, such as 7 to 10).

By means of the invention totally modem products can be provided. Although the production of cellulose esters and adjustment of technical properties (such as molar mass and substitution) by process-technical means are well known technology, benefits offered by transglycosylation of cellulose have not been seen.

The structure of cellulose ester can be altered by the technique of the invention in such a way that it has also been provided the properties of starch esters, such as biodegradability, without essentially loosing good technical properties of cellulose ester, which are among others mechanical strength and ability to form a film.

Cellulose derivative can originate from any natural source, especially from plants and bacteria. An especially preferably used derivative is based on products produced from said natural cellulose by oxidation, hydrolysis, cross-linking, esterification or etherification.

It has been found suitable to use a cellulose-based component that originates from cellulose and an ester formed from one or more C₁ to C₂₄ carboxylic acid.

According to a preferred embodiment, the polysaccharide component is esterified cellulose, preferably cellulose acetate having the degree of substitution from 0.5 to 3, preferably from 1.5 to 3, and most suitably from 2.0 to 3.0.

According to another preferred embodiment, the polysaccharide component is hydroxyalkylated cellulose, hemicellulose or an ester thereof. In that case especially preferred are hydroxypropyl and ethylcellulose, having a molar degree of substitution not more than 1.4, preferably not more than 1 and especially preferably from 0.1 to 0.8 and substitution of ester is at least 1.7, preferably 2...-5.

The transglycosylation products are produced from the aforementioned polysaccharide derivatives by reacting a derivative at acidic conditions with such an alkanol that contains 1 to 5 hydroxyl groups, and by recovering the reaction product or taking it for further processing, which can furthermore be a new reaction step or a mixing step.

Transglycosylation technique of starch is described in a publication of Manfred Biermann, Karl Schimidt und Paul Schulz, "alkylpolyglukoside-Technology und Eigenschafien", Starch Stärke 45 (1993) Nr. 8. p. 281-288.

The intratransglycosylation reactions of starch molecule are described in publication (A book by LA. Radley; Starch Production Technology, Chapter 15, W. Action; The Manufacturing of Dextrins and British Gums, Applied Science Publisher Ltd, London, UK, 1976).

The reaction of cellulose acetate and diol can be carried out as an acid-catalytic batch reaction at a temperature of 120 to 140 °C or mechano-chemically at a temperature of 190 to 250 °C, whereby the dosing of the requisite chemicals can be reduced by more than 90 %. According the one especially preferred embodiment, operation is done at temperature of 140 to 190 °C. When hypophosphorous acid or a mixture of it with orthophosphoric acid is being used as a catalyst, the risk for colourization of the product can be decreased at temperatures over 200 °C. With high temperature also the requisite residence time can naturally be shortened.

By means of reactive extrusion the mass can be homogenized and the penetration of chemicals into the starting material before the actual reaction can be enhanced. Mechanical modifying compensates for the use of chemical media.

By means of the reactive extrusion according to the invention, a significant conversion is achieved based on the diols used as starting materials and with respect to the catalysts. Thus, polyols and catalysts used as starting materials in technical products do not necessarily have to be removed from the reaction mixture.

In general, a desired amount of a mixture of a mono-, di- or triol and an acidic catalyst is mixed into cellulose polymer as an aerosol, in order to form a reaction mixture, mechanical energy and heat is supplied to the reaction mixture, and the reaction of the polysaccharide with the mono-, di- or triol is carried out as a continuous process in a transporting extrusion apparatus, until a polymer melt is obtained as a result: the reaction can be controlled by adjusting the temperature of different zones of the extrusion apparatus.

According to the invention the transglycosylation reaction is preferably effected by forming an aerosol from a mixture of alcohol and acidic substance, which is added evenly to a powdery cellulose derivative in a dosage that corresponds to the molar mass of the final product. It is also possible mechanically, in a compacting apparatus, to compact the powder before the reaction step and to subsequently carry out the reaction step and the blending with an extruder.

As an alcohol component, a lower alkanol having 1 to 6 carbon atoms and 1 to 5 hydroxyl groups, especially 1 to 3 hydroxyl groups, is especially used. As examples can be mentioned methanol, ethanol, n-propanol, isopropanol, n-butanol and 2-butanol, substituted lower alcohols, such as methoxymethanol and ethoxymethanol, and alcohols containing 2 or 3 hydroxyl groups, such as ethylene glycol, diethylene glycol, propylene glycol and glycerol.

Depending on the number of hydroxyl groups the alcohol component is usually used in an amount of from 0.01 to 20 % by weight from the mass of the hydrocarbon component. Usually from 0.1 to 10 % by weight of ethylene and diethylene glycol or propylene glycol, from the mass of the cellulose derivative, is a suitable amount. If it is decided to carry out the reaction as a batch reaction, the suitable amount of alcohol component is usually from 0.2 to 1.5 parts by weight from the mass of carbohydrate.

As noted above, before the reaction step in the extruder, during the reaction step or as an after-treatment of the product, an oxidative chemical from 0.1 to 10 % by weight from mass of cellulose polymer can be used. The oxidative step can be also performed in a separate reaction line and by mixing a proportion of 99 to 1 % by weight to the transglycosylation product of cellulose. Usually inorganic peroxides or persalts, such as hydrogen peroxide or ammonium persulphate, are used as oxidants.

As an acidic catalyst for transglycosylation e.g. strong mineral acid is used, such as sulphuric acid, hydrochloric acid, nitrogen acid, polyphosphoric acid, strong organic acid, such as paratoluenesulphonic acid, methanesulphonic acid, benzenesulphonic acid or trifluoromethanesulphonic acid, or mono- or polyalkylated aryl, mono- or polysulphonic acid, such as xylene or cumenesulphonic acid or dodecylbenzenesulphonic acid, or an acidic ion-exchange resin. The acid catalyst is typically used in amounts that are about 0.0005 to about 5 mol-%, preferably about 0.002 to about 2.0 mol-%, especially preferably about 0.015 to 0.3 mol-%, from the amount of cellulose derivative used.

According to an especially preferred embodiment of the invention, a phosphoruscontaining acid is used as a catalyst, such as phosphoric acid H₃PO₄, phosphorous acid H₃PO₃ or hypophosphorous acid (phosphinic acid) H₃PO₂.The anion of the acid binds during the reaction to the molecule chain of cellulose as the molar mass decreases. Due to this, the amount of phosphoric acid decreases as the reaction progresses. Thereby also excessive degradation of cellulose molecule can be prevented in the reaction step. Although the products preserve the basic characteristics of the starting material, there is an advantage to be gained from the coupling to the reaction product during the reaction: the effect of the phosphoric acid catalysis will be seen e.g. in colourlessness of the final product and in improved heat resistance.

It is particularly preferred to use phosphinic acid or mixture thereof (1:100 ... 100:1, especially 50:50... 100:1 parts by weight) together with phosphoric acid in order to avoid the destruction of the cellulose residue.

Phosphoric acid residues in the product are also beneficial with regard the purpose of use of the product, e.g. when the product is used in the production of biopolymer water dispersions.

The phosphoric acid residues known in the natural polymers are characteristics for e.g. potato starch.

The cleaving of the cellulose acetate by means of a batch or continuous mechano-chemical or extrusion technical process is not previously known. The extrusion technology used in this invention can be carried out into practice e.g. with a reactive extrusion system having the following steps.

### Dosing of chemicals into the cellulose derivative (acrosol)

Chemicals, or alkanol and acidic catalyst, as well as the oxidant, if desired, are mixed into the powdery cellulose material. This is carried out most suitably in a separate fluidized bed-type mixing apparatus, of which there are several different are commercially available, and as an example of which the Norwegian Forberg should be mentioned. Liquid chemicals or solutions are dosed fog-like in this apparatus with a suitable nozzle. The droplet size of an aerosol is most suitable in a range of 100 to 10,000 nm. If necessary, surfactants can be mixed to the liquid. Powdery chemicals are dosed as milled fine, most suitable before dosing of liquid chemicals. The particle size of powdery components is usually ca. 0.001 to 5 mm. The concentration of the liquid chemicals is chosen in such a way that the total amount of liquid remains sufficiently small, in this case less than 30 %, preferably ca. 5...- 25 % calculated from the dry matter. With this measure, the runnability is improved in the extruder.

The dosing of chemicals, ie. dosing of alkanols, acidic catalysts or peroxides by atomization, can be effected also in DRAIS and LÖDIGE type contact drier equipped with an atomizer, vacuum line, condensation unit, steam or thermo oil heating. Fluidizing of the reaction mass can be carried out with adjustments of speed of blade mixers and a lump crusher. By the reactor system, if necessary, the carbohydrate can be removed into the polymer, naturally contained moisture, or moisture coming along with reagents, by heating the reaction mass at pressure of 200 mbar to a temperature of ca. 60 °C.

### Compacting of premixed mass

The premixed mass can be compacted and granulated, if necessary. By this, running of the mass in the feeding zone of the extruder is improved and the yield is increased. There are several compactors commercially available, of which a German Kahl should be mentioned as an example.

### Extrusion

Mass is then led into an extrusion technique apparatus, where the reaction step takes place. The extruder can be of the 1- to 3-screw type. A preferred form is a 1-screw extruder due to its simple structure and lower costs. The screw of the 1-screw extruder can be a simple transporting screw, wherein separate, for example Maddock type, mixing parts and compression after the feeding zone can be used, e.g. in ratio of 1:1.5 to 1:10, preferably at least about 1:2 and typically about 1:3. Running the relatively dry cellulose polymerchemical-mixture in the screw extruder is easy, as long as the feeding zone of the screw has sufficient volume and overheating of the mass is prevented by cooling the mantle in the feeding zone.

The mantle of the extruder is equipped with customary heating resistances after the feeding zone. In those cases, where acidity of the treated mass is high, the material of the screw and mantel has to be chosen correspondingly. The nozzle of the extruder is chosen merely according to the requirements of the further process. Usually the mass is either cooled and granulated or applied directly onto the direct target of use.

The temperature of extrusion is generally about from 105 to 230 °C, preferably from about 140 to 190 °C.

It is typical that when a substantially dry cellulose chemical mixture is run on, in particular, a 1-screw extruder, the formation of a high pressure is not possible. Due to this, in the actual extruder a substantially loose nozzle tool is used, and if pressure is needed for application of the product, pressure is increased with a separate melt pump after the extruder. Granulated shape can be run in successive extruders, in which the quality and properties of the products evolve along with the processing cycles. If necessary, mass can milled, washed and dried after cooling in case-specific manner.

Compacted and granulated reaction mixture can also be brought to a heating oven, in which transglycosylation occurs in the cellulose polymer granules.

In the examples below, the invention is illustrated by using as examples the transglycosylation product of cellulose ester or oxidized cellulose ester used as such, blended into the oxidized cellulose ester and other biopolymers, such as starch esters.

### Example 1

### Transglycosylation of cellulose acetate by batch reaction

The purpose of the example is to disintegrate in a controlled manner a commercial cellulose acetate by acid catalytic transglycosylation with a diol. The aim is to produce a material having a sufficiently small molecular material for analytical purposes (GPC, NMR).

### Starting materials:

300 g (1.03 mol) of cellulose acetate (Courtaulds Chemicals), DS 2.4
900 g (14.5 mol) of ethylene glycol,
0.50 g (0.05 mol) of sulphuric acid

Cellulose acetate and ethylene glycol, wherein sulphuric acid has been mixed, are mixed in a flask. The mixture is heated at 110 to 115 °C, until the mixture melts. It is mixed in the reaction temperature, until the mixture becomes clear and viscosity drops to a level ca. 3000 cP / 125 °C / 100 rpm (Brookfield). Heating lasted for 1.5 h. The reaction mixture was poured in cold water. The precipitate formed was washed with water by decanting for removing the excess ethylene glycol and sulphuric acid and finally filtered and dried at ca. 40 °C.

The molecular weight of the product was M_{w} 18867 and Mₙ 7235 as determined by GPC technique using dimethylacetamide-LiCl as solvent.

The product was analysed by NMR-technique. The acetylation degree was recorded by ¹³C NMR: DSₜₒₜ 2.56. Distribution of acetyl groups in different carbons was as follows: DS_{C2} 0.88, DS_{C6} 0.80 and DS_{C3} 0.88.

Substitution of ethylene glycol was assessed by ¹H NMR from the deacetylated and acid hydrolyzed sample. As glycol substitution was obtained ca. 0.14 as measured from the dissolved product.

### Example 2

Cellulose acetate transglycosylation as a batch reaction with different reagent amounts and in different conditions

### Experiment 1

### Starting materials:

1 kg (4.03 mol) of cellulose acetate (dried at 105 °C)
1.5 kg (24.20 mol) of ethylene glycol
0.01 kg (0.1 mol) of sulphuric acid

The experiment was performed respectively as above, but a Lödige reactor was used as the reactor. Reaction time was 5.5 h / at 95 to 100 °C. Reaction mixture was precipitated from water and washed by decanting and filtering such as in experiment 1.

The purpose of drying the starting material was to remove moisture contained in CA, which can cause undesirable hydrolysis of acetate or cellulose in acidic reaction conditions. The product was analysed by NMR-technique. Acetylating degree was recorded by ¹³C-NMR: DSₜₒₜ 2.01. Distribution of acetyl group in different carbons were the following: DS_{C2} 0.83, DS_{C6} 0.56 and DS_{C3} 0.62.

### Experiment 2

### Starting materials

| | | | |
|---|---|---|---|
| 100 g | CA | dried in a heating oven overnight/105 °C | ∼0.37 mmol |
| 100 g | 1,2-ethanediol | | 1.61 mol |
| 0.5 g | H₂SO₄ | Dissolved in glycol | 5 mmol |

Starting materials are mixed at room temperature. After this the flask is set in an oil bath at a temperature of 120 °C and mixed with motor mixer. After four hours the reaction mixture had not yet melted homogenous, but it started to darken after heating for 4.5 h.

### Experiment 3

Was performed with the same reagent amounts as in experiment 2, but ethylene glycol and sulphuric acid were heated first to reaction temperature and cellulose acetate was added gradually into the hot reaction mixture over ca. 1.5 h. The reaction mixture was homogenous after reaction of 2.5 h, but was dark in colour.

### Example 3

Cellulose acetate transglycosylation by extrusion technique sulphuric acid as a catalyst

### Starting materials

1000 g (3.44 mol) of cellulose acetate (dried at 105 °C)
100 g (1.60 mol) of ethylene glycol
1 g (0.01 mol) of sulphuric acid

The experiment was performed according the following general procedure. Sulphuric acid used as a catalyst was dissolved in diol used. The solution was mixed by spraying using either a separate pressure vessel or a manual dosing spray gun into the solid starch acetate in a fludized bed-type mixer (Forberg F50) or in case of small batches, in universal mixer. The powdery mass obtained as product was fed into the extruder either as such or compacted. If compacting was used, it was performed in screen disc press, which had possibility for cooling and heating of matrix and mantle (-30...+150 °C) while the measures of the matrix were D/d 150170 mm and of hole number typically 120.

The thickness of the matrix was typically 30 mm and the diameter of the holes was 5 mm. 1-screw extruder (D35, L/D=25, modular screw and cylinder) was used as an extruder. The screw had components for dispersive mixing/modification, typically Maddoc type. Beginning from the midway of the screw, compression was 1:3. Operating temperature ranged from 140 to 160 °C, always according to the case. Extruding time was typically from 10 to 15 min. Extruding was repeated, if necessary. The extruded products were purified for analytical purposes by milling them into fine powder, by mixing the powder in ca. 10 amount of water and by mixing the mixture for 12 h. After that the product was filtered, washed with water and dried in a convection oven. The product was extruded at 150 to 160 °C twice through the extruder.

### Example 4

Cellulose acetate transglycosylation by extrusion technique phosphoric/phosphorous acid as catalyst

The experiment was performed as described in Example 3, but phosphoric acid or a mixture of phosphoric acid and hypophosphorous acid, respectively, were used as catalyst. Reaction temperature was 200 °C and the number of extrusion times were 2.

### Example 5

### Oxidation of cellulose acetate with hydrogen peroxide

The powdery cellulose acetate is weighed into a fluidized bed-type mixer, which is in this case "a dough machine" Electrolux Assistant. A 35 % solution of hydrogen peroxide-water is dosed with a spraying bottle into the powder while mixing. After the dosing the powder is removed to a vessel that is placed in a convection oven. Function of the oven is to fasten the reaction of the hydrogen peroxide. Due to the self igniting sensitivity of peroxide while the concentration was > 16 %, the laboratory tests were performed in three steps with 5 % dosing in each. In every step, a sample was taken, from which MM (Melt Flow Rate) was analyzed and a melt was prepared, viscosity of which was measured.

Amounts of materials:
Experiment I, 5 % H₂O₂

| | |
|---|---|
| Cellulose acetate | 100 grams (calculated as dry matter) |
| Peroxide-water mixture (35 %) | 14.3 grams (5 % from the amount of CA) |

Experiment II, 10 % H₂O₂

| | |
|---|---|
| Cellulose acetate of experiment I | 100 grams (calculated as dry matter) |
| Peroxide-water mixture (35 %) | 14.3 grams (5 % from the amount of CA) |

Experiment III, 15 % H₂O₂

| | |
|---|---|
| Cellulose acetate of experiment II | 100 grams (calculated as dry matter) |
| Peroxide-water mixture (35 %) | 14.3 grams (5 % from the amount of CA) |

The reaction of hydrogen peroxide is fastened in an oven for 3 to 5 h at 110 °C after each dosing time. In this time hydrogen peroxide reacts totally and converts into water and oxygen.

### Analyses

Melt Flow Rate indexes were made for CAoxes.

Temperature 230 °C, preheating for 180 s, mass 2.16 kg

| Sample | Manual | Auto |
|---|---|---|
| 5 % | 1.64 g/ 10 min | 1.51 cm³/10 min |
| 10 % | 2.16 g110 min | 2.05 cm³/10 min |
| 15 % | 11.8 g/10 min | 8.32 cm³/10 min |

Melt viscosities were measured from the products of experiments I to III (BrookfieldMiennocell) softened with triethyl citrate in ratio of 1:1.

| Sample | Viscosity, 200 °C, shear rate 0.28 l/s |
|---|---|
| 5 % | 24 900 cP |
| 10 % | 24 500 cP |
| 15 % | 12 200 cP |

It is seen from the results that with hydrogen peroxide levels of 5 and 10 %, the viscosity levels are almost identical, but increasing the hydrogen peroxide level from 10 % to 15 %, viscosity is decreases under to a half.

### Example 6

### Use of modified cellulose acetates in hot melt adhesives

Adhesive formulations in Table 1 were produced by melting the mixtures at 150 °C for 2 to 3 h.

**Table 1. Cellulose acetate-based adhesive formulations**

| Adhesive | CA | Product of Example 1 | Product of Example 3 | Product of Example 5 | Transglycosylation product of starch acetate | TEC | Viscosity Cone and Plate, 150 °C, 100 rpm |
|---|---|---|---|---|---|---|---|
| 1 | 30 g | | | | | 24 g | Does not melt even in 24 h |
| 2 | | | 30 g | | | 24 g | Melts, viscosity high |
| 3 | | | | 25 g | | 35 g | 454I cP (Brookfield) |
| 4 | | 14 g | 6 g | | | 15 g | 1250 cP |
| 5 | | | 6 g | | 14 g | 15 g | 1450 cP |
| 6 | | | 10 g | | 10 g | 15g | 2700 cP |
| 7 | | | | 500 g | | 350 g | |

| | | | | | | | |
|---|---|---|---|---|---|---|---|
| CA = Commercial cellulose acetate, TEC = triethyl citrate, the transglycosylation product of starch is according to FI Patent No. 113 875. | | | | | | | |

The adhering properties of the adhesives were assessed with sizing experiments by applying the adhesives onto paper at 150 °C and sizing another paper on the adhesive seam. Best adhesions to paper were obtained with adhesives 3 to 6 and fiber ruptures while sizings were tried to detach. Sizing was tried with adhesive 7 at temperatures of 140, 160 and 180 °C. Best sizing result was achieved at 180 °C. A commercial, untreated cellulose acetate did not form a melt at the conditions used.

### Example 7

### The use of modified cellulose acetates for improving barrier characteristics

Paperboard (250 g/m²) that had been treated with cellulose carbamate at treating level of 22 g/m² (Production and use of the product is described in patent applications FI 20020163 and FI 20030027), was coated with a melt according to experiment 7 of example 6. Permeabilities of water steam were measured from the products, and results were the following:
untreated cardboard 1161 g/m²*24 h,
cardboard treated with cellulose carbamate 1071 g/m²*24 h and
cardboard treated with cellulose carbamate and coated with a melt mixture of experiment 7 of example 6, 69 g/m²*24 h.

Although coating amount in melt coating was high in this experiment (694 g/m²), the melt coating is a potential barrier coating.

### Example 8

The effect of the amount of hydrogen peroxide on the melting temperature of cellulose acetate

When the experiment sequence of example 5 was continued such a way that the amount of hydrogen peroxide used was 25 % from the amount of cellulose acetate, the melt temperature of the material started to rise (Table 2).

**Table 2. Effect of the hydrogen peroxide amount on melting temperature of the treated cellulose acetate**

| Sample | Temperature range of melting point / °C |
|---|---|
| Reference | 244 - 247 |
| 5 % H₂O₂ | 237 - 244 |
| 10 % H₂O₂ | 235 - 241 |
| 15 % H₂O₂ | 232 - 238 |
| 25 % H₂O₂ | 237 - 247 |

Measurements were performed with a melting point apparatus Electrothermal Engineering Ltd. (G.W.Berg & Co)

## Claims

1. A transglycosylation product of a cellulose derivative comprising an alkyl or hydroxyalkyl glycoside of a cellulose ester or ether, wherein the alkyl or hydroxyalkyl groups of the glycoside residue comprise a carbon chain having 1 to 4 carbon atoms with 0 to 2 free hydroxyl groups and being connected to the 1-carbon of the anhydroglucose unit via an oxy group.

2. The glycosylation product according to claim 1, **characterized in that** the alkyl or hydroxyalkyl groups are derived from an alcohol, a diol or a triol, preferably the alkyl or hydroxyalkyl groups are derived from methanol, butanol, ethylene glycol, propylene glycol, butanediol or glycerol.

3. The product according to claims 1 or 2, **characterized in that** the cellulose ester is an ester formed from cellulose and one or more aliphatic C₂₋₂₄ carboxylic acid.

4. The product according to claim 3, **characterized in that** the carboxylic acid component of the ester is derived from acetic acid, propionic acid or butyric acid or mixtures thereof.

5. The product according to claim 3, **characterized in that** the carboxylic acid component is derived from a naturally occurring saturated or unsaturated fatty acid, preferably the carboxylic acid component is derived from palmitic acid, stearic acid, oleic acid, linolic acid or mixtures thereof.

6. The product according to any one of claims 1 to 5, **characterized in that** the cellulose ester contains both long and short chained carboxylic acid components, preferably the cellulose ester is a mixed ester of cellulose and acetic acid and stearic acid.

7. The product according to any one of claims 1 to 6, **characterized in that** the degree of substitution (DS) of the cellulose ester is 2.0 to 3.0.

8. The product according to any one of claims 1 to 7, **characterized in that** a hydroxyalkyl ether substituent having characteristics values of chemical shift in ¹H NMR spectrum 5.0 and 4.7 ppm (C-1 cellulose glycol alpha and beta) has been attached to its cellobiose unit.

9. A method for production of transglycosylation products, **characterized in that** an ester derivative of cellulose is reacted at acidic conditions with an alkanol having 1 to 4 hydroxyl groups, and the reaction product is recovered.

10. The method according to of claim 9, **characterized in that** the cellulose ester is mixed with mono-, di- or triol to form a reaction mixture, reaction mixture is heated and the reaction of cellulose ester with mono-, di- or triol is continued, until a clear solution is obtained, the reaction mixture is cooled and the reaction product is recovered by precipitating it into water and separating the precipitate, which is washed and dried, or the reaction product is recovered by evaporating the alkanol..

11. The method according to claim 9 or 10, **characterized in that** transglycosylation reaction is carried out in the form of a homogenized batch reaction by using diol and cellulose ester, at a mass relation of 1:1 to 1:10, or by reactive extrusion using 1 to 15 %, especially about 5 to 15 % of diol calculated from the mass of the starting material.

12. Use of cellulose derivative of a transglycosylation product according any of claims 1 to 8 or the transglycosylation product produced according to any one of claims 9 to 11 as an adhesive.

13. The use according to claim 12, **characterized in that** the glycosylation product of the cellulose derivative is formulated as a hot melt adhesive.

14. The use according to claims 12 or 13, **characterized in that** the transglycosylation product is formed from a cellulose ester.

15. The use of the transglycosylation product cellulose ester according to any of claims 1 to 8 as a hydrophobic coating.

## Patentansprüche

1. Ein Transglycosylierungsprodukt aus einem Cellulosederivat, umfassend ein Alkyl- oder Hydroxyalkylglycosid eines Celluloseesters oder -ethers, wobei die Alkyl- oder Hydroxyalkylgruppen des Glycosidrestes eine Kohlenstoffkette mit 1 bis 4 Kohlenstoffatomen, die 0 bis 2 freie Hydroxylgruppen aufweisen, umfassen und wobei sie an den 1-Kohlenstoff der Anhydroglucoseeinheit über einen Oxyrest gebunden sind.

2. Das Glycosylierungsprodukt nach Anspruch 1, **dadurch gekennzeichnet, dass** sich die Alkyl- oder Hydroxyalkylgruppen von einem Alkohol, einem Diol oder einem Triol ableiten; vorzugszeise leiten sich die Alkyl- oder Hydroxyalkylgruppen von Methanol, Butanol, Ethylenglycol, Propylenglycol, Butandiol oder Glycerin ab.

3. Das Produkt nach den Ansprüchen 1 oder 2, **dadurch gekennzeichnet, dass** der Celluloseester ein Ester ist, der aus Cellulose und einer oder mehreren aliphatischen C₂₋₂₄-Carbonsäuren gebildet ist.

4. Das Produkt nach Anspruch 3, **dadurch gekennzeichnet, dass** sich die Carbonsäurekomponente des Esters aus Essigsäure, Propansäure oder Buttersäure oder Gemischen davon ableitet.

5. Das Produkt nach Anspruch 3, **dadurch gekennzeichnet, dass** sich die Carbonsäurekomponente von einer natürlich vorkommenden gesättigten oder gesättigten Fettsäure ableitet; vorzugsweise leitet sich die Carbonsäurekomponente aus Palmitinsäure, Stearinsäure, Ölsäure, Linolsäure oder Gemischen davon ab.

6. Das Produkt nach einem der Ansprüche 1 bis 5, **dadurch gekennzeichnet, dass** der Celluloseester sowohl lang- als auch kurzkettige Carbonsäurekomponenten enthält; vorzugsweise ist der Celluloseester ein Mischester aus Cellulose und Essigsäure sowie Stearinsäure.

7. Das Produkt nach einem der Ansprüche 1 bis 6, **dadurch gekennzeichnet, dass** der Grad der Substitution (DS) des Celluloseesters 2,0 bis 3,0 beträgt.

8. Das Produkt nach einem der Ansprüche 1 bis 7, **dadurch gekennzeichnet, dass** ein Hydroxyalkylethersubstituent mit Merkmalswerten für chemische Verschiebung im ¹H NMR-Spektrum von 5,0 und 4,7 ppm (C-1-Celluloseglycol alpha und beta) an seine Cellobioseeinheit gebunden wurde.

9. Ein Verfahren zur Herstellung von Transglycosylie gsprodukten, **dadurch gekennzeichnet, dass** ein Esterderivat von Cellulose unter sauren Bedingungen mit einem Alkanol, der 1 bis 4 Hydroxygruppen aufweist, umgesetzt wird und das Reaktionsprodukt gewonnen wird.

10. Das Verfahren nach Anspruch 9, **dadurch gekennzeichnet, dass** der Celluloseester mit Mono-, Di- oder Triol gemischt wird, um ein Reaktionsgemisch zu bilden, das Reaktionsgemisch erwärmt wird und die Umsetzung von Celluloseester mit Mono-, Di- oder Triol fortgeführt wird, bis eine klare Lösung erhalten wird, das Reaktionsgemisch abgekühlt wird und das Reaktionsprodukt durch sein Ausfällen in Wasser und Abtrennen des Fällungsprodukts, das gewaschen und getrocknet wird, gewonnen wird oder das Reaktionsprodukt durch Verdampfen des Alkanols gewonnen wird.

11. Das Verfahren nach Anspruch 9 oder 10, **dadurch gekennzeichnet, dass** die Transglycosylierungsreaktion in Form einer homogenisierten Batchreaktion unter Verwendung von Diol und Celluloseester bei einem Massenverhältnis von 1:1 bis 1:10 oder einer reaktiven Extrusion unter Verwendung von 1 bis 15%, insbesondere etwa 5 bis 15% Diol, berechnet aus der Masse des Ausgangsmaterials, durchgeführt wird.

12. Verwendung eines Cellulosederivats eines Transglycosylierungsprodukts nach einem der Ansprüche 1 bis 8 oder des Transglycosylierungsprodukts, hergestellt nach einem der Ansprüche 9 bis 11, als ein Haftmittel.

13. Die Verwendung nach Anspruch 12, **dadurch gekennzeichnet, dass** das Glycosylierungsprodukt aus dem Cellulosederivat als ein Heißschmelzhaftmittel formuliert ist.

14. Die Verwendung nach den Ansprüchen 12 oder 13, **dadurch gekennzeichnet, dass** das Transglycosylierungsprodukt aus einem Celluloseester gebildet ist.

15. Die Verwendung des Transglycosylierungsprodukt-Celluloseesters nach einem der Ansprüche 1 bis 8 als eine wasserabweisende Beschichtung.

## Revendications

1. Produit de transglycosylation d'un dérivé cellulosique comprenant un alkyl- ou hydroxyalkylglycoside d'un ester ou éther cellulosique, dans lequel les groupes alkyle ou hydroxyalkyle du résidu glycoside comprennent une chaîne de carbone contenant 1 à 4 atomes de carbone avec 0 à 2 groupes hydroxyle libre et sont liés au carbone 1 du motif anhydroglucose par l'intermédiaire d'un groupe oxy.

2. Produit de glycosylation selon la revendication 1, **caractérisé en ce que** les groupes alkyle ou hydroxyalkyle sont dérivés d'un alcool, d'un diol ou d'un triol, de préférence les groupes alkyle ou hydroxyalkyle sont dérivés du méthanol, du butanol, de l'éthylène glycol, du propylène glycol, du butanediol ou du glycérol.

3. Produit selon la revendication 1 ou 2, **caractérisé en ce que** l'ester cellulosique est un ester formé à partir de la cellulose et d'un ou de plusieurs acides carboxyliques en C₂ à C₂₄.

4. Produit selon la revendication 3, **caractérisé en ce que** le composant acide carboxylique de l'ester est dérivé de l'acide acétique, de l'acide propionique ou de l'acide butyrique ou d'un de leurs mélanges.

5. Produit selon la revendication 3, **caractérisé en ce que** le composant acide carboxylique est dérivé d'un acide gras saturé ou insaturé d'origine naturel, de préférence le composant acide carboxylique est dérivé de l'acide palmitique, de l'acide stéarique, de l' acide oléique, de l' acide linolique ou d'un de leurs mélanges.

6. Produit selon l'une quelconque des revendications 1 à 5, **caractérisé en ce que** l'ester cellulosique contient à la fois des composants acide carboxylique à chaîne longue et courte, de préférence l'ester cellulosique est un ester mixte de cellulose et d'acide acétique et d'acide stéarique.

7. Produit selon l'une quelconque des revendications 1 à 6, **caractérisé en ce que** le degré de substitution (DS) de l'ester cellulosique est de 2,0 à 3,0.

8. Produit selon l'une quelconque des revendications 1 à 7, **caractérisé en ce qu'**un substituant de type éther d'hydroxyalkyle présentant des valeurs caractéristiques de déplacement chimique sur un spectre de RMN ¹H de 5,0 ppm et de 4,7 ppm (C-1 de cellulose glycol alpha et bêta) a été fixé à son motif cellobiose.

9. Procédé de production de produits de transglycosylation, **caractérisé en ce qu'**un dérivé d'ester de cellulose est mis à réagir dans des conditions acides avec un alcanol contenant 1 à 4 groupes hydroxyle, et le produit réactionnel est récupéré.

10. Procédé selon la revendication 9, **caractérisé en ce que** l'ester cellulosique est mélangé avec un mono-, di- ou tri-ol pour former un mélange réactionnel, le mélange réactionnel est chauffé et la réaction de l'ester cellulosique avec le mono-, di- ou tri-ol est poursuivie jusqu'à ce qu'une solution limpide soit obtenue, le mélange réactionnel est refroidi et le produit réactionnel est récupéré par précipitation dans l'eau et séparation du précipité qui est lavé ou séché, ou le produit réactionnel est récupéré par l'évaporation de l'alcanol.

11. Procédé selon la revendication 9 ou 10, **caractérisé en ce que** la réaction de transglycosylation est réalisée sous la forme d'une réaction discontinue homogénéisée en utilisant un diol et un ester cellulosique, selon une relation de masse de 1 : 1 à 1 : 10, ou par extrusion réactive en utilisant 1 % à 15 %, en particulier environ 5 % à 15 %, de diol, calculé à partir de la masse du composé de départ.

12. Utilisation d'un dérivé cellulosique d'un produit de transglycosylation selon l'une quelconque des revendications 1 à 8 ou du produit de transglycosylation produit selon l'une quelconque des revendications 9 à 11, comme adhésif.

13. Utilisation selon la revendication 12, **caractérisée en ce que** le produit de glycosylation du dérivé cellulosique est formulé sous la forme d'un adhésif thermofusible.

14. Utilisation selon la revendication 12 ou 13, **caractérisée en ce que** le produit de transglycosylation est formé à partir d'un ester cellulosique.

15. Utilisation de l'ester cellulosique de produit de transglycosylation selon l'une quelconque des revendications 1 à 8, comme revêtement hydrophobe.
